# EUROPÄISCHE PATENTANMELDUNG

(11) **EP 2 172 799 A1**
(43) Veröffentlichungstag der Anmeldung: **07.04.2010**
(21) Anmeldenummer: 09012543.6
(22) Anmeldetag: 05.10.2009
(51) Int. Cl.: G02B 21/00

(54) **Optisches System für ein Konfokalmikroskop**

(30) Priorität: 06.10.2008 CH 15802008
(71) Anmelder: Nectar Imaging S.r.l., 40026 Imola (BO) (IT)
(72) Erfinder: Berner, Markus, CH-8180 Bülach (CH)
(74) Vertreter: Rottmann, Maximilian

(57) **Zusammenfassung**

Ein optisches System für ein Konfokalmikroskop mit einem Beleuchtungsmuster (1), von welchem Lichtstrahlen zu einem Objekt (6) gehen, das die Lichtstrahlen reflektiert, einem Strahlteiler (2) zum Durchlassen der vom Beleuchtungsmuster (1) ausgehenden Lichtstrahlen in Richtung zum Objekt (6) und zum Ablenken der vom Objekt (6) in einer Fokalebene (7) reflektierten Lichtstrahlen in Richtung zu einem Detektor (3) zum Detektieren eines Bilds des Objekts (6) und einer Linsenanordnung (4, 5, 8) zwischen dem Strahlteiler (2) und dem Objekt (6), wobei zumindest eine Linse der Linsenanordnung (4, 5, 8) zur Verschiebung der Fokalebene (7) am Objekt bewegbar angeordnet ist, ist derart ausgebildet, dass wenigstens eine Linse der Linsenanordnung (4, 5, 8) eine asphärische Linse ist und die bewegbare Linse (4) der Linsenanordnung (4, 5, 8) an einer vom Objekt (6) entfernten Stelle angeordnet ist.

## Beschreibung

Die Erfindung betrifft ein optisches System für ein Konfokalmikroskop.

Es gibt verschiedene Typen von 3D-Scannern, welche eine Oberfläche eines zu scannenden Objekts aufgrund der Tatsache erkennen, dass sich die Oberfläche im Fokus befindet. Beispiele für solche Systeme sind Laser-Konfokalmikroskope, wie sie aus US2007/0109559 A1 bekannt sind, oder pOFPT, wie es in der CH-Patentanmeldung 016247/07 beschrieben ist.

Im Stand der Technik sind weiterhin optische Systeme bekannt, wie sie im Folgenden kurz diskutiert werden.

DE 10 2005 013 949 A1 betrifft eine Scanvorrichtung zur Fokussierung eines Strahlenbündels, nämlich eines parallelen Strahls auf einen Punkt. Bei dieser Scanvorrichtung, die nicht zum Einsatz für ein Konfokalmikroskop bestimmt ist und somit nicht besonders hohen Anforderungen an die Optik für die Abbildungstechnik genügen muss, wird zur Fokussierung ein optisches Element verschoben, das von dem zu scannenden Objekt am weitesten entfernt angeordnet ist.

US 2002/0167723 A1 betrifft ein Konfokalmikroskop zur Messung von Objekten, die in Scanrichtung eine sehr geringe Höhe, wie beispielsweise 0,1 mm, aufweisen, weshalb es bei diesem Konfokalmikroskop keine Probleme bezüglich der Optik gibt. Probleme bezüglich der Optik gibt es dann, wenn Objekte mit Höhen von beispielsweise 10 mm gemessen werden sollen, wie es nachfolgend noch erläutert wird.

EP 1 746 448 A2 betrifft ein Mikroskopobjektiv, wobei es sich bei dem Mikroskop nicht um ein Konfokalmikroskop handelt und daher an seine Optik nicht so hohe Anforderungen gestellt werden. Mit einer der Kompensation von Temperatureffekten dienenden Stelleinrichtung wird ein Fokus nur um einen sehr kleinen Bereich variiert.

WO 2008/101605 A1 betrifft ein konfokales Lasermikroskop, wobei beim Verstellen einer Linse der Farbfehler der Optik korrigiert wird. Ein Verstellen der Scantiefe erfolgt wohl an anderer Stelle. Es gibt in der Beschreibung Hinweise darauf, dass möglicherweise das Objekt in der Tiefe verschoben wird.

WO 2005/091046 A1 betrifft einen intraoralen Scanner, wobei eine bewegliche Linse nahe dem Objekt angeordnet ist.

Es ist anzumerken, dass vorangehend und im Folgenden "Objekt" immer die Bedeutung eines zu scannenden und bildmässig zu erfassenden Objekts hat.

Um einen Tiefenscan durchzuführen, muss man den Fokus durch das Objekt fahren. Das kann je nach Anwendung derart erfolgen, dass man das Objekt bewegt oder das ganze Gerät bzw. dessen optisches System in Bezug auf das Objekt verschiebt oder dass man mindestens ein Element im optischen System verschiebt.

Um beispielsweise Objekte mit einer Höhe von beispielsweise 10 mm zu scannen, kann die Scantiefe sehr viel grösser als die Tiefenauflösung des optischen Systems sein, was darin resultiert, dass die Optik des optischen System höhere Ansprüche erfüllen muss als beispielsweise der Scanner gemäss dem oben angegebenen Dokument US 2002/0167723 A1, der nur dafür ausgelegt sein muss, Objekte mit sehr geringer Höhe zu messen.

Alle diese Systeme haben gemeinsam, dass an die Abbildungsqualität sehr hohe Anforderungen gestellt werden. Will man die Tiefe des Objekts genau messen können, so muss die Punktgrösse eines projizierten Punkts sehr klein sein. Idealerweise sollte die Optik beugungsbegrenzt sein, also die theoretisch mögliche Genauigkeit liefern. Bei manchen praktischen Anwendungen werden aber Punktgrössen um ca. 5 µm (RMS Punktradius) genügen müssen, was immer noch einer ausserordentlich hohen Anforderung entspricht.

Bei manchen Systemen (z.B. Parallel-Konfokalmikroskop oder pOFPT) scannt man gleichzeitig eine ganze Fläche. Demgemäss muss die Abbildungsqualität auf der gesamten Fläche sehr gut sein. Das steigert die Anforderungen nochmals.

Zudem muss bei solchen Geräten naturgemäss die numerische Apertur NA auf der Objektseite relativ gross sein, um eine gute Tiefenauflösung zu erhalten. Auch das erhöht die Anforderungen an das optische System.

Wann immer es möglich ist, wird man deshalb das optische System nicht verändern und beim Scannen entweder das Objekt bewegen oder das ganze Gerät bzw. dessen optisches System in Bezug auf das Objekt bewegen. Es ist schon sehr schwer, ein optisches System herzustellen, das an einer Fokalebene die geforderte Genauigkeit hat. Bewegt man noch Linsen im optischen System muss dann die Abbildungsqualität in allen Fokuspositionen genau sein, was dann noch schwieriger ist.

Muss aus praktischen Gründen dennoch ein Element in der Optik verschoben werden, wird typischerweise der Ansatz der unendlich korrigierten Optik angewendet. Dabei wird diejenige Linse verschoben, welche dem Objekt am nächsten ist, wie es bereits aus dem bereits angegebenen Dokument WO 2005/091046 A1 bekannt ist. So kann ohne grössere Probleme der Fokus durchgestimmt werden, während die Abbildungseigenschaften (Verzerrungen, Vergrösserung, Schärfe) in allen Fokalebenen etwa gleich sind.

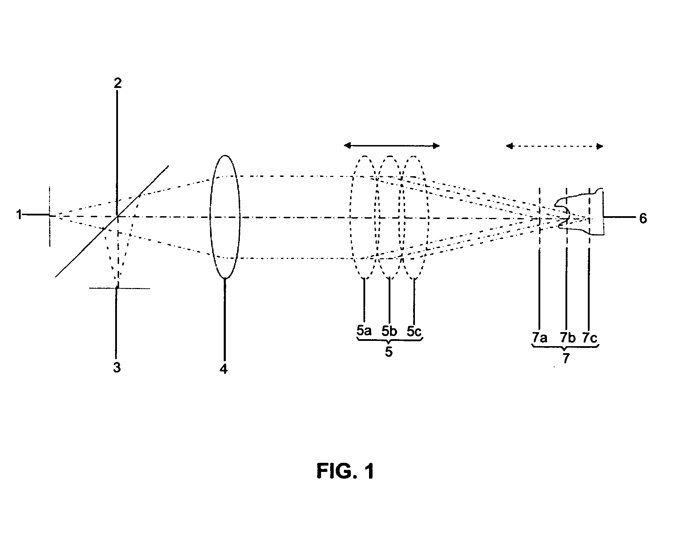

Ein derartiges optisches System gemäss dem Stand der Technik ist beispielsweise in der Fig. 1 gezeigt. Das optische System besteht dabei aus einem Beleuchtungsmuster 1, einem Strahlteiler 2, einem Detektor 3, einer ersten Linse 4 auf der Seite des Beleuchtungsmusters 1 und einer zweiten Linse 5 auf der Seite eines Objekts 6. Lichtstrahlen vom Beleuchtungsmuster 1 laufen durch den Strahlteiler 2 in Richtung zum Objekt 6 durch die erste Linse 4 und die zweite Linse 5 bis zu einer Fokalebene 7 beim Objekt 6. Die vom Objekt 6 reflektierten Lichtstrahlen laufen zurück durch die Linsen 5, 4 und werden am Strahlteiler 2 in Richtung zum Detektor 3 abgelenkt, wo eine Abbildung des Objekts 6 detektiert wird.

Beim Laserkonfokalmikroskop besteht das Beleuchtungsmuster aus mindestens einer Punktlichtquelle, dem Laser, und bei einem pOFPT-Gerät besteht das Beleuchtungsmuster aus einem Bild, welches von einer Lichtquelle durchstrahlt wird.

Durch den Pfeil über der zweiten Linse 5 ist eine Bewegung der zweiten Linse 5 angedeutet, welche Bewegung in einer durch einen gestrichelten Pfeil angedeuteten entsprechenden Bewegung der Fokalebene 7 am Objekt 6 resultiert. Die unterschiedlichen Positionen der Linse 5 und die entsprechenden Positionen der Fokalebene 7 sind in der Fig. 1 durch die Bezugszeichen 5a und 7a, 5b und 7b und 5c und 7c bezeichnet. Zur Bewegung der Linse 5 ist eine Antriebsvorrichtung vorgesehen, die beispielsweise ein gesteuerter Motor sein kann.

Bei einigen Anwendungen hat dieser Ansatz jedoch einen gravierenden Nachteil. Beispielsweise muss bei einem intraoralen Scanner für das Vermessen von Zähnen die Optik, die in den Mund eines Patienten eingeführt wird, sehr kompakt sein. Wenn aber die zweite Linse auf der Seite eines Objekts derart ausgebildet ist, dass sie zur Verschiebung der Fokalebene bewegbar vorgesehen ist, muss der Scanner auf der Seite des Objekts, und somit im Mund eines Patienten, zur Unterbringung der Linsenbewegung und ihres Antriebs grösser ausgebildet werden. Dies führt dazu, dass ein solcher Scanner gerade auf der Seite, auf welcher er möglichst kompakt ausgebildet sein soll, grössere Ausmasse annimmt. Ein kompakterer Aufbau mit einer bewegbaren Linse auf der Seite des Objekts ist nur sehr schwer und teuer zu realisieren.

Es ist somit die Aufgabe der vorliegenden Erfindung, ein optisches System für ein Konfokalmikroskop zur Verfügung zu stellen, das insbesondere auf der Seite eines Objekts kompakt ausgebildet ist, das zu scannen und bildmässig zu erfassen ist.

Diese Aufgabe wird erfindungsgemäss durch das im Anspruch 1 angegebene optische System gelöst. Die abhängigen Ansprüche 2 bis 14 zeigen spezielle Ausführungsformen des optischen Systems gemäss Anspruch 1.

Erfindungsgemäss ist insbesondere ein optisches System für ein Konfokalmikroskop gemäss dem Oberbegriff des Anspruchs 1 derart ausgebildet, dass wenigstens eine Linse der Linsenanordnung eine asphärische Linse ist und die bewegbare Linse der Linsenanordnung an einer vom Objekt entfernten Stelle angeordnet ist. Dadurch kann eine kompakte Ausgestaltung des optischen Systems in der nahen Umgebung des Objekts erreicht werden.

Vorzugsweise ist als die bewegbare Linse der Linsenanordnung eine asphärische Linse eingesetzt.

Die Linsenanordnung weist bevorzugt die bewegbare Linse und zumindest eine nicht bewegbare Linse an einer dem Objekt nahen Stelle auf. Zusätzlich weist die Linsenanordnung vorzugsweise Lichtstrahlführungsmittel mit nicht bewegbaren Linsen auf.

Insbesondere ist eine Ausgestaltung der Linsen mittels eines Optimierungsprogramms für optische Linsen derart berechnet, dass eine Punktgrösse für alle Punkte in einem Bild für alle Fokalebenen minimiert ist. Es ist ausreichend, wenn die Minimierung der Punktgrösse für 11 Punkte im Bild und an drei verschiedenen Fokalebenen erfolgt. Das Optimierungsprogramm für optische Linsen zum Erhalten einer minimalen Punktgrösse nimmt vorzugsweise eine Abbildung des Objekts auf eine gekrümmte Fläche für jede Fokalebene als asphärische Fläche vor.

Eine der nicht bewegbaren Linsen im optischen System ist bevorzugt eine Linse aus hochbrechendem Material und sehr dick ausgestaltet. Vorzugsweise hat dabei das Glas der dicken Linse mit hochbrechendem Material einen Brechungsindex von über 1,7 und eine Dicke von über 25 mm, so dass die tatsächliche geometrische Länge der Optik über 12,5 mm länger als die optische Länge der Optik ist.

Vorzugsweise ist die Scantiefe wenigstens das 100-fache der Tiefenauflösung. Beispielsweise ergibt sich bei einer relativ hohen Tiefenauflösung von etwa 50 µm bei einer zu scannenden Höhe von etwa 10 mm ein Faktor von 200 zwischen Tiefenauflösung und Scanbereich.

Eine Korrektur verzerrter Abbildungen gescannter Oberflächen des Objekts kann mittels Kompensationsberechnungen erfolgen. Dabei gibt es die Möglichkeiten der Kompensationsberechnung auf der Basis der Berechnungen des Optimierungsprogramms oder durch eine Kalibrierungsmessung.

Das erfindungsgemässe optische System ist insbesondere für den Einsatz bei einem intraoralen Scanner für das Vermessen von Zähnen geeignet. Der intraorale Scanner weist insbesondere einen vorderen Bereich zur Einführung in den Mund eines Patienten und einen hinteren Bereich ausserhalb des Mundes des Patienten auf, wobei der vordere Bereich schmal und kompakt ausgebildet ist und die bewegbare Linse im hinteren Bereich angeordnet ist.

Die angegebenen und weitere Merkmale und Einzelheiten der Erfindung werden einem Fachmann auf dem Gebiet aus der folgenden detaillierten Beschreibung und den beigefügten Zeichnungen klarer, die Merkmale der vorliegenden Erfindung anhand eines Beispiels darstellen und wobei
- Figur 1: einen Aufbau einer Optik für ein Konfokalmikroskop nach dem Stand der Technik darstellt,
- Figur 2: einen Aufbau einer Optik für ein Konfokalmikroskop gemäss der vorliegenden Erfindung darstellt, und
- Figur 3: ein gemäss der vorliegenden Erfindung verwendetes Kompensationsprinzip darstellt.

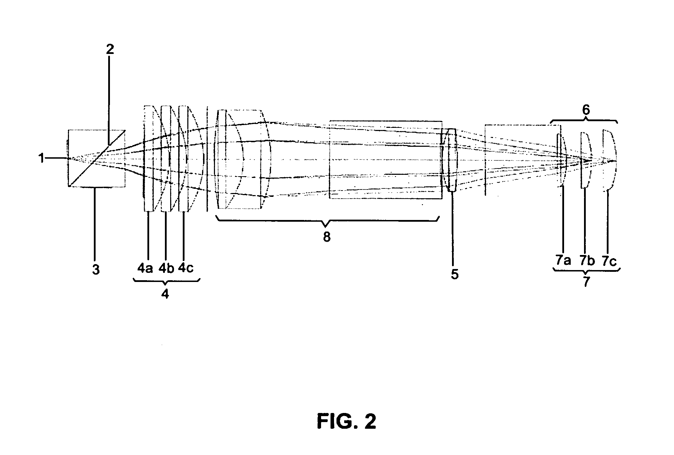

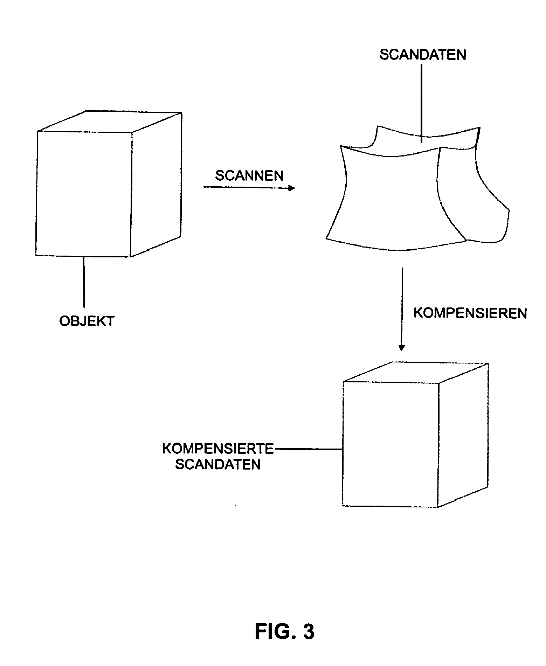

Im Folgenden wird die vorliegende Erfindung anhand einer bevorzugten Ausführungsform unter Bezugnahme auf die Figuren 2 und 3 detailliert erklärt werden.

Die Figur 2 zeigt einen prinzipiellen Aufbau eines optischen Systems für ein Konfokalmikroskop gemäss der vorliegenden Erfindung. Wie das in Figur 1 gezeigte optische System für ein Konfokalmikroskop nach dem Stand der Technik besteht das in Figur 2 gezeigte optische System für ein Konfokalmikroskop gemäss der vorliegenden Erfindung aus einem Beleuchtungsmuster 1, einem Strahlteiler 2, einem Detektor 3, einer ersten Linse 4 auf der Seite des Beleuchtungsmusters 1 und einer zweiten Linse 5 auf der Seite eines Objekts 6. Zusätzlich zu dem in Figur 1 gezeigten optischen System weist das optische System der Figur 2 noch Lichtstrahlführungsmittel 8 mit nicht bewegbaren Linsen zwischen der ersten Linse 4 und der zweiten Linse 5 auf. Die Lichtstrahlführungsmittel 8 erlauben die Optik trotz der objektseitig grossen numerischen Apertur NA lang und schlank zu gestalten, und zwar insbesondere deshalb, weil eine der verwendeten Linsen sehr dick ist und aus Glas mit einem sehr hohem Brechungsindex aufgebaut ist. Um die geforderte Abbildungsqualität zu erreichen, ist vorzugsweise mindestens eine der optischen Flächen ebenfalls asphärisch ausgebildet. Somit laufen bei dem optischen System der Figur 2 Lichtstrahlen vom Beleuchtungsmuster 1 durch den Strahlteiler 2 in Richtung zum Objekt 6 durch die erste Linse 4, die Strahlführungsmittel 8 und die zweite Linse 5 bis zu einer Fokalebene 7 beim Objekt 6. Im Gegensatz zu dem optischen System der Figur 1 erfolgt bei dem optischen System der Figur 2 eine Bewegung der ersten Linse 4 entfernt vom Objekt, welche Bewegung durch drei unterschiedliche Positionen der Linse 4 gezeigt ist, die jeweils mit 4a, 4b und 4c bezeichnet sind. Entsprechend der Bewegung der Linse 4 wird die Fokalebene 7 am Objekt 6 verschoben, deren Positionen jeweils mit 7a, 7b und 7c bezeichnet sind. Zur Bewegung der Linse 4 ist eine nicht gezeigte Antriebsvorrichtung vorgesehen, die beispielsweise ein gesteuerter Motor sein kann.

Die an einer jeweiligen Fokalebene 7a, 7b, 7c reflektierten Lichtstrahlen laufen durch die Linsenanordnung 4, 5, 8 und werden am Strahlteiler 2 in Richtung zum Detektor 5 abgelenkt, wo eine Detektion der Abbildung des Objekts 6 in der Fokalebene 7 erfolgt.

Um bei dem optischen System gemäss der vorliegenden Erfindung die geforderte Abbildungsqualität in allen Fokalebenen 7a, 7b, 7c zu erreichen, werden insbesondere folgende Vorkehrungen getroffen.

Es werden asphärische Linsen eingesetzt. Solche Linsen sind in jüngerer Zeit viel günstiger und mit viel besserer Präzision als bisher herstellbar. Heute kann man solche Linsen sogar pressen, was dazu führt, dass solche Linsen bei einer Massenherstellung nicht wesentlich teurer als klassische, sphärische Linsen sind.

Die Berechnung der Linsen erfolgt mit einem Optimierungsprogramm für optische Linsen. Mit diesem Optimierungsprogramm werden insbesondere die Punktgrössen für alle Punkte im Bild für alle Fokalebenen minimiert. Bei der Durchführung der Optimierung hat es sich gezeigt, dass es ausreichend ist, an 11 verschiedenen Punkten im Bild und an drei verschiedenen Fokalebenen die Punktgrösse zu minimieren.

Mit dem Optimierungsprogramm wird weiterhin das Beleuchtungsmuster auf eine gekrümmte Fläche abgebildet, wobei die Form dieser Oberfläche vom Optimierungsprogramm frei optimiert werden konnte, um möglichst geringe Punktgrössen zu erhalten. Die Fokalebene ist somit keine eigentliche Ebene, sondern eine beliebig gekrümmte Fläche. Für die Fokalebene wird dabei ebenfalls eine asphärische Fläche gewählt.

Es wird für jede Position der Fokalebene 7a, 7b, 7c eine eigene, asphärische Fläche optimiert, um für jede Position möglichst geringe Punktgrössen zu erreichen.

Mit insgesamt drei asphärischen Linsenflächen konnten so sehr geringe Punktgrössen an allen Positionen im Bild und an allen Positionen der Fokalebene bei grosser numerischer Apertur NA erreicht werden, die durch Öffnungswinkel und Brechungsindex einer Linse definiert ist.

Um das optische System ausreichend lang zu machen, damit bei ihrem Einsatz als intraoraler Scanner auch noch die hintersten Zähne erreichbar sind, wird eine nicht bewegbare Linse 5, 8 der Linsenanordnung 4, 5, 8 aus hochbrechendem Material und sehr dick gestaltet. Bevorzugt ist der Brechungsindex des Glases der dicken Linse 5, 8 aus hochbrechendem Material grösser als 1,7, wie zum Beispiel 1.92, und beträgt ihre Dicke über 25 mm, wie zum Beispiel 31.5 mm. Ein Öffnungswinkel ist vorzugsweise grösser als 20°. Infolge des Brechungsgesetzes ist dann die tatsächliche geometrische Länge der Optik über 12,5 mm länger als die optische Länge der Optik. Mit den beispielhaften Werten von 1,92 für den Brechungsindex und von 31,5 mm für die Dicke einer nicht bewegbaren Linse 5, 8 ergibt sich nach dem Brechungsgesetz eine optische Länge von 31.5 mm/1.92 = 14.4 mm. Eine tatsächliche geometrische Länge der Optik beträgt aber 31.5 mm. Somit konnte die Optik also um ca. 15 mm verlängert werden, was ausreicht, um auch noch die hintersten Zähne im Mund eines Patienten vermessen zu können. Ohne diese spezielle Ausgestaltung wäre das optische System entweder kürzer, dicker oder ungenauer geworden oder hätte nicht mehr eine so grosse numerische Apertur erlaubt.

Das optische System der vorliegenden Erfindung erlaubt, Körperoberflächen mit einer vorteilhaft gestalteten Optik sehr genau zu scannen.

Nachteilig ist dabei, dass die gescannten Oberflächen verzerrt erscheinen. Ebene Oberflächen erscheinen gekrümmt, gerade Linien erscheinen ungerade. Ausserdem sind die Vergrösserungen und die Krümmungen an jeder Stelle im Bild unterschiedlich.

Durch den Einsatz moderner Computer ist es aber ohne weiteres möglich, die Verzerrungen rechnerisch zu kompensieren, denn die Verzerrungen sind völlig reproduzierbar.

Die theoretischen Verzerrungen sind bekannt, denn die Form der Bildfläche wurde ja vom Optimierungsprogramm berechnet. Das Ergebnis davon kann zur Kompensation der Verzerrungen herangezogen werden. Besonders bevorzugt kann aber auch die Verzerrung gemessen und danach kompensiert werden. Eine derartige Kompensation von Verzerrungen ist beispielsweise in Figur 3 gezeigt.

Bei der Kompensation mittels Messung der Verzerrung geht man vorteilhaft wie folgt vor:

Es werden zuerst ebene Oberflächen gemessen. Diese erscheinen nach dem Scannen gekrümmt.

Dann wird die Krümmung an jeder Stelle eines Objekts gemessen. Bei nachfolgenden Messungen wird dann jeder Wert um diese Krümmung zurückkorrigiert. Die Krümmungen können tabellarisch abgespeichert werden oder durch eine mathematische Funktion, wie z.B. ein Polynom, angenähert werden.

Danach werden Platten mit geraden Linien vermessen. Die Messdaten der Platten werden zuerst so korrigiert, dass sie keine Krümmung mehr aufweisen (siehe oben), und dann werden die Formen der Linien bestimmt. Diese werden wie die Krümmung der Flächen korrigiert (tabellarisch oder durch Funktionen angenähert).

Die vorliegende Erfindung zeigt ein optisches System für ein Konfokalmikroskop, bei welchem eine Verschiebung einer Fokalebene mittels eines Bewegens einer Linse erfolgt. Die bewegbare Linse ist erfindungsgemäss insbesondere an einer Stelle angeordnet, die möglichst weit entfernt von einem Objekt ist, wodurch erreicht wird, dass das optische System in der näheren Umgebung eines Objekts kompakt ausgebildet ist. Insbesondere kann das optische System bei intraoralen Scannern zur Vermessung von Zähnen eingesetzt werden, ohne dass die Abmessungen des Scanners im Mund eines Patienten vergrössert sind.

## Patentansprüche

1. Optisches System für ein Konfokalmikroskop mit einem Beleuchtungsmuster (1), von welchem Lichtstrahlen zu einem Objekt (6) gehen, das die Lichtstrahlen reflektiert, einem Strahlteiler (2) zum Durchlassen der vom Beleuchtungsmuster (1) ausgehenden Lichtstrahlen in Richtung zum Objekt (6) und zum Ablenken der vom Objekt (6) in einer Fokalebene (7) reflektierten Lichtstrahlen in Richtung zu einem Detektor (3) zum Detektieren eines Bilds des Objekts (6) und einer Linsenanordnung (4, 5, 8) zwischen dem Strahlteiler (2) und dem Objekt (6), wobei zumindest eine Linse der Linsenanordnung (4, 5, 8) zur Verschiebung der Fokalebene (7) am Objekt (6) bewegbar angeordnet ist, **dadurch gekennzeichnet, dass** wenigstens eine Linse der Linsenanordnung (4, 5, 8) eine asphärische Linse ist und die bewegbare Linse (4) der Linsenanordnung (4, 5, 8) an einer vom Objekt (6) entfernten Stelle angeordnet ist.

2. Optisches System nach Anspruch 1, **dadurch gekennzeichnet, dass** als die bewegbare Linse (4) der Linsenanordnung (4, 5, 8) eine asphärische Linse eingesetzt ist...

3. Optisches System nach Anspruch 1 oder 2, **dadurch gekennzeichnet, dass** die Linsenanordnung (4, 5, 8) die bewegbare Linse (4) und zumindest eine nicht bewegbare Linse (5, 8), welche an einer dem Objekt (6) nahen Stelle angeordnet ist, aufweist.

4. Optisches System nach Anspruch 3, **dadurch gekennzeichnet, dass** die Linsenanordnung (4, 5, 8) weiterhin Lichtstrahlführungsmittel (8) mit nicht bewegbaren Linsen aufweist.

5. Optisches System nach einem der vorangehenden Ansprüche, **dadurch gekennzeichnet, dass** eine Ausgestaltung der Linsenanordnung (4, 5, 8) mittels eines Optimierungsprogramms für optische Linsen derart berechnet ist, dass eine Punktgrösse für alle Punkte in einem Bild für alle Fokalebenen (7a, 7b, 7c) minimiert sind.

6. Optisches System nach Anspruch 5, **dadurch gekennzeichnet, dass** die Minimierung der Punktgrösse für 11 Punkte im Bild und an drei verschiedenen Fokalebenen (7a, 7b, 7c) erfolgt.

7. Optisches System nach Anspruch 5 oder 6, **dadurch gekennzeichnet, dass** das Optimierungsprogramm für optische Linsen zum Erhalten einer minimalen Punktgrösse eine Abbildung des Objekts (6) auf eine gekrümmte Fläche für jede Fokalebene (7a, 7b, 7c) als asphärische Fläche vornimmt.

8. Optisches System nach einem der vorangehenden Ansprüche, **dadurch gekennzeichnet, dass** mindestens eine der nicht bewegbaren Linsen (5, 8) der Linsenanordnung (4, 5, 8) eine Linse aus hochbrechendem Material ist und sehr dick ausgestaltet ist.

9. Optisches System nach Anspruch 8, **dadurch gekennzeichnet, dass** das Glas der dicken Linse (5, 8) aus hochbrechendem Material einen Brechungsindex von über 1,7 und eine Dicke von über 25 mm hat, so dass die tatsächliche geometrische Länge der Optik über 12,5 mm länger als die optische Länge der Optik ist.

10. Optisches System nach einem der vorangehenden Ansprüche, **dadurch gekennzeichnet, dass** die Scantiefe grösser als das 100-fache der Tiefenauflösung ist.

11. Optisches System nach einem der Ansprüche 5 bis 10, **dadurch gekennzeichnet, dass** eine Korrektur verzerrter Abbildungen gescannter Oberflächen des Objekts (6) mittels Kompensationsberechnungen erfolgt.

12. Optisches System nach Anspruch 11, **dadurch gekennzeichnet, dass** die Kompensationsberechnung auf der Basis der Berechnungen des Optimierungsprogramms oder durch eine Kalibrierungsmessung erfolgt.

13. Optisches System nach einem der vorangehenden Ansprüche, **dadurch gekennzeichnet, dass** es bei einem intraoralen Scanner für das Vermessen von Zähnen als Objekte eingesetzt wird.

14. Optisches System nach Anspruch 13, **dadurch gekennzeichnet, dass** der intraorale Scanner einen vorderen Bereich zur Einführung in den Mund eines Patienten und einen hinteren Bereich ausserhalb des Mundes des Patienten aufweist, wobei der vordere Bereich schmal und kompakt ausgebildet ist und die bewegbare Linse (4) im hinteren Bereich angeordnet ist.
